# FASCICULE DE BREVET EUROPEEN

(11) **EP 2 328 971 B1**
(45) Date de publication et mention de la délivrance du brevet: **27.02.2013**
(21) Numéro de dépôt: 09752881.4
(22) Date de dépôt: 25.09.2009
(51) Int. Cl.: C08L 33/00

(54) **ARTICLE PLAT TRANSPARENT A BASE DE MATERIAUX ACRYLIQUES NANOSTRUCTURES**
TRANSPARENTER FLACHER ARTIKEL AUS NANOSTRUKTURIERTEN ACRYLMATERIALIEN
TRANSPARENT FLAT ARTICLE MADE OF NANOSTRUCTURED ACRYLIC MATERIALS

(30) Priorité: 26.09.2008 FR 0856485
(43) Date de publication de la demande: 08.06.2011
(73) Titulaire: Arkema France, 92700 Colombes (FR)
(72) Inventeur: GERARD, Pierre, F-64230 Denguin (FR)
(86) Numéro de dépôt international: PCT/FR2009/051825
(87) Numéro de publication internationale: WO 2010/034952

(56) Documents cités:
- WO-A-2004/037921

## Description

La présente invention se rapporte au domaine des matériaux polymères acryliques nanostructurés ayant à la fois de très bonnes propriétés optiques et de bonnes propriétés mécaniques et de surface. Ces matériaux sont destinés notamment à la fabrication d'écrans plats à guide de lumière ou LGP pour « Light Guide Panel » ou d'écrans extra-plats à éclairage par la tranche, qui sont des composantes essentielles des moniteurs plats pour l'informatique et la télévision et assurent la fonction de diffuseur de lumière d'un grand nombre de dispositifs portables, tels que micro-ordinateurs, téléphones, consoles de jeux et autres.

Les moniteurs à écran plat se généralisent de plus en plus dans la mesure où leur facteur d'encombrement et leur poids sont très inférieurs à ceux des écrans traditionnels à tube cathodique. De plus, les technologies utilisées dans les écrans plats sont moins consommatrices d'énergie (consommation inférieure à 10W contre 100W pour les écrans à tube cathodique) et n'émettent pas de rayonnement électromagnétique. Le facteur esthétique joue également un rôle important dans l'intérêt que suscitent les écrans plats depuis quelques années.

Il est connu de fabriquer des écrans pour moniteurs plats en matériaux polymères. A cet effet ont déjà été employés des matériaux tels que des résines acryliques, des polycarbonates, des polyesters (US 2006256277), des copolymères styrène-acrylonitrile (US 5.213.852) etc.

Des essais réalisés par la demanderesse ont montré que des écrans fabriqués en polyméthacrylate de méthyle (PMMA) possèdent de très bonnes propriétés de transparence. Cependant, ces écrans deviennent trop fragiles et cassants lorsque leur épaisseur est inférieure à 1 mm.

Par ailleurs, du PMMA dit « choc » contenant des additifs de type cceur/écorce avec un coeur en élastomère, acrylate de butyle par exemple et une écorce en PMMA, possède des propriétés améliorées en termes de résistance mécanique, mais se caractérise par une perte de transmission lumineuse avec la température, ce qui rend son utilisation impropre pour la fabrication d'écrans plats, et en particulier extra-plats, qui subissent un échauffement au cours de leur utilisation (échauffement dû à l'utilisation de diodes pour éclairer l'écran sur la tranche). Ce type de matériau subit une perte de transmission lumineuse en fonction de la température, ce qui ne convient pas pour cette application.

D'autres écrans fabriqués en polycarbonate, décrits dans le document JP 2003-15536, présentent eux aussi de bonnes propriétés de transparence, ainsi qu'une très bonne résistance aux chocs. Les propriétés de surface de ces matériaux, telles que leur résistance aux rayures et à l'abrasion ne sont toutefois pas suffisantes pour permettre leur emploi dans la fabrication d'écrans plats ou extraplats, avec lesquels l'utilisateur garde un contact direct. Leurs propriétés de transmission lumineuse sont plus faibles que celles obtenues avec un PMMA.

Des feuilles transparentes amorphes de polyéthylène téréphtalate ont également été utilisées comme matériau support dans les dispositifs d'affichage, comme indiqué par exemple dans le document KR 20030056686. L'usage de ces feuilles est répandu en raison de leur capacité à être fabriquées sous des formes diverses par moulage. Ce matériau n'est toutefois pas adapté à une utilisation dans les dispositifs d'affichage portables, en raison de leur résistance insuffisante à la flexion et aux rayures. Ceci est dû au fait que leur épaisseur est limitée en pratique à maximum 200 microns.

Il existe donc un besoin accru d'un matériau polymère qui possède à la fois de très bonnes propriétés optiques (transmission lumineuse, absence de trouble), mécaniques (résistance à l'impact) et surfaciques (résistance aux rayures et à l'abrasion), tout en préservant ces propriétés (notamment optiques) dans une large gamme de températures d'utilisation de l'écran plat, allant de la température ambiante jusqu'à 80°C.

Le but de la présente invention est de remédier aux inconvénients précités.

La présente invention se propose de fournir un matériau acrylique nanostructuré ayant à la fois de très bonnes propriétés optiques qui restent constantes sur une large plage de températures (allant de la température ambiante à 80°C), et qui garde de bonnes propriétés surfaciques (résistance à l'abrasion et aux rayures) et mécaniques (résistance à l'impact) même lorsque ledit matériau présente une faible épaisseur, typiquement inférieure à 1 mm.

Par «faible épaisseur » on entend selon l'invention une épaisseur d'écran plat allant de 300 à 900 microns, de préférence comprise de 400 à 700 micromètres.

Selon un premier aspect, l'invention concerne une composition de résine acrylique contenant une matrice de PMMA (composant 1) ayant une température de transition vitreuse supérieure à 0°C dans laquelle est dispersé un copolymère à blocs acrylique (composant 2) répondant à la formule (A)ₘ-(B)ₚ-I, p étant un entier supérieur ou égal à 2, m étant un entier inférieur ou égal à p, B étant un bloc polymère lié directement au coeur I par une liaison covalente, obtenu par la polymérisation d'un mélange de monomères (B₀) contenant au moins 60% en poids de monomères acryliques (b₁), A étant un bloc polymère, lié directement au bloc B par une liaison covalente, obtenu par la polymérisation d'un mélange de monomères (A₀) contenant au moins 60% en poids de monomères méthacryliques (a₁),

Le coeur (I) est un groupement organique possédant n (supérieur ou égal à 2) atomes de carbone auxquels sont rattachés les blocs B par l'une des valences de ces atomes de carbone. I répond à l'une des formules générales **Ia**, **Ib** et **Ic** suivantes : 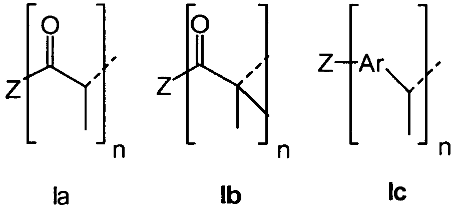 où Ar désigne un groupement aromatique substitué, Z est un radical organique ou minéral polyfonctionnel de masse molaire supérieure ou égale à 14.

Le PMMA désigne un homo- ou copolymère du méthacrylate de méthyle (MAM), comprenant en poids au moins 50% de MAM. Le copolymère est obtenu à partir de MAM et d'au moins un comonomère copolymérisable avec le MAM. De préférence, le copolymère comprend en poids de 70 à 99,5%, avantageusement de 80 à 99,5%, de préférence de 80 à 99% de MAM pour respectivement de 0,5 à 30%, avantageusement de 0,5 à 20%, de préférence de 1 à 20% de comonomère. De préférence, le comonomère copolymérisable avec le MAM est un monomère (méth)acrylique ou un monomère vinylaromatique tel que par exemple le styrène, les styrènes substitués, l'alpha-méthylstyrène, le monochlorostyrène, le tertbutyl styrène. De préférence, il s'agit d'un (méth)acrylate d'alkyle, notamment de l'acrylate de méthyle, d'éthyle, de propyle, de butyle, du méthacrylate de butyle.

De manière caractéristique, la composition de l'invention contient de 60 à 80% en poids de ladite matrice de PMMA, et de 20 à 40% en poids dudit copolymère à blocs.

Selon un deuxième aspect, la présente invention a trait à un procédé de fabrication d'un article plat transparent à partir de la composition de résine acrylique précitée, ledit procédé étant de préférence un procédé d'extrusion, pour obtenir une feuille d'épaisseur comprise entre 300 et 900 microns.

Selon un autre aspect, l'invention concerne un article plat transparent contenant la composition de résine acrylique précitée, présentant les caractéristiques suivantes :
- une épaisseur allant de 300 à 900 microns, de préférence de 400 à 700 micromètres ;
- une transmission lumineuse au moins égale à 91 % ;
- un trouble (« haze ») inférieur ou égal à 2%;
- pas d'apparition de trouble lorsque la température monte jusqu'à 80°C.

Selon encore un autre aspect, l'invention a trait à l'utilisation de l'article plat transparent précité dans des dispositifs du type écran plat LCD équipé de diodes électroluminescentes ou LED (pour « light-emitting diode ») ou écrans extra-plats avec un éclairage tangentiel (par la tranche).

Selon un autre aspect, l'invention concerne des écrans plats ou extra-plats comprenant au moins un article plat transparent selon l'invention.

### Description détaillée de l'invention

La présente invention fournit un matériau acrylique nanostructuré ayant à la fois de très bonnes propriétés optiques qui restent constantes sur une large plage de températures (allant de la température ambiante jusqu'à 80°C), et qui garde de bonnes propriétés surfaciques (résistance à l'abrasion et aux rayures) et mécaniques (résistance à l'impact) même lorsque ledit matériau présente une faible épaisseur.

Ledit matériau se présente sous la forme d'une composition de résine acrylique contenant une matrice de PMMA (composant 1), ayant une température de transition vitreuse supérieure à 0°C, dans laquelle est dispersé un copolymère à blocs acrylique (composant 2) de formule générale (A)ₘ-(B)ₚ-I dans laquelle :
- p est un entier supérieur ou égal à 2,
- m est un entier inférieur ou égal à p,
- B est un bloc polymère lié directement au coeur I par une liaison covalente, obtenu par la polymérisation d'un mélange de monomères (B₀) contenant au moins 60% en poids de monomères acryliques (b₁),
- A est un bloc polymère, lié directement au bloc B par une liaison covalente, obtenu par la polymérisation d'un mélange de monomères (A₀) contenant au moins 60% en poids de monomères méthacryliques (a₁),
- le coeur (I) est un groupement organique possédant n (supérieur ou égal à 2) atomes de carbone auxquels sont rattachés les blocs B par l'une des valences de ces atomes de carbone. I répond à l'une des formules générales **Ia**, **Ib** et **Ic** suivantes : 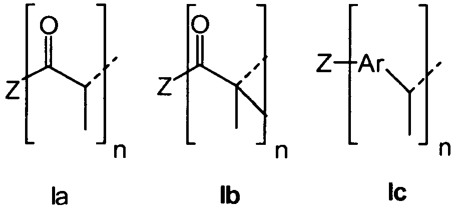
la, Ib et Ic sont issues de la décomposition thermique de l'alcoxyamine correspondante comme décrit plus loin (formules II), où Ar désigne un groupement aromatique substitué, Z est un radical organique ou minéral polyfonctionnel de masse molaire supérieure ou égale à 14. Z est associé à n fonctions de type acryl dans la formule **Ia**, à n fonctions type méthacryl dans la formule **Ib** et à n fonctions de type styryl dans **Ic**.

A titre d'exemple non limitatif de la portée de l'invention, Z peut être un groupement polyalcoxy en particulier dialcoxy tels que les radicaux 1,2 éthane-dioxy, 1,3 propane-dioxy, 1,4 butane dioxy, 1,6 hexane dioxy, le 1,3,5 tris(2-éthoxy) acide cyanurique, polyaminoamine, telles que les poly éthylènes amines le 1,3,5 tris(2-éthyl amino) acide cyanurique, polythioxy, phosphonate ou polyphosphonate. Z peut être aussi un groupement minéral par exemple un complexe organométallique tel que : Mⁿ⁺O⁻ₙ, la deuxième valence des atomes d'oxygène correspond à la liaison apparaissant entre Z et les groupements acryl, méthacryl et styryl. M peut être un atome de magnésium, de calcium, d'aluminium, de titane, de zirconium, de chrome, de molybdène, de tungstène, de manganèse, de fer, de cobalt, de nickel, de palladium, de platine, de cuivre, d'argent, d'or, de zinc d'étain.

Ar représente par exemple un noyau benzénique ou naphtalénique comportant un ou plusieurs substituants choisis parmi les radicaux alkyle ou alcoxy en C₁ à C₁₈, typiquement en C₁ à C₈.

B est un bloc polymère lié directement au coeur I par une liaison covalente, obtenu par la polymérisation d'un mélange de monomères (B₀) contenant au moins 60% en poids de monomères acryliques (b₁). B présente une température de transition vitreuse (Tg) inférieure à 0°C, une masse moyenne en poids (Mw) allant de 40000 à 200000g/mol et un indice de polydispersité (Ip) compris allant de 1,1 à 2,5 et de préférence de 1,1 à 2,0.

Le mélange de monomères B₀ comprend de 60 à 100% en poids d'au moins un monomère acrylique (b₁) choisi parmi les acrylates d'alkyles ayant une chaîne alkyle comportant au moins deux atomes de carbone et de préférence au moins quatre atomes de carbone tels que l'acrylate de butyle, d'octyle, de nonyle, de 2-éthyl héxyle, les acrylate de polyéthylène glygol ou l'acrylonitrile.

Les autres monomères, (b₂) entrant dans la constitution du bloc B sont choisis parmi les monomères polymérisables par voie radicalaire tels que les monomères éthyléniques, vinyliques et similaires.

Le bloc A présente une Tg supérieure à 50°C. Il est obtenu par la polymérisation d'un mélange de monomères A₀ comprenant :
- de 60 à 100% en poids, de préférence de 75 à 98% en poids, d'au moins un monomère méthacrylique (a1) choisi parmi les méthacrylates d'alkyles tels que de méthyle, de butyle, d'octyle, de nonyle, de 2-(éthyl héxyle), ou encore des méthacryliques fonctionnels tels que l'acide méthacrylique, le méthacrylate de glycidyle, le méthacrylonitrile ou tout méthacrylate comportant une fonction alcool, amide ou amine,
- de 0 à 40 % en poids, de préférence de 2 à 25% en poids, d'au moins un monomère (a₂) choisi parmi les anhydrides tels que l'anhydride maléique ou des monomères vinyl aromatiques tels que le styrène ou ses dérivés, en particulier l'alpha méthyl styrène et les monomère répondant à b1.

Tg désigne la température de transition vitreuse d'un polymère mesurée par DSC (calorimétrie à balayage différentiel) selon la norme ASTM E1356, par exemple avec des rampes de montée en température à 20°C par minute.

De plus, on gardera éventuellement dans le mélange une proportion des monomères servant au bloc B. Celle-ci est au plus égale à 20% du mélange des monomères servant au bloc A.

La masse moléculaire moyenne en poids (Mw) du copolymère à blocs (A)ₘ-(B)ₚ-I est comprise entre 80000 g/mol et 300000 g/mol avec une polydispersité comprise entre 1,5 et 2,5.

Etant donné que des monomères issus du bloc B peuvent entrer dans la composition du bloc A, pour décrire complètement le copolymère, il convient de préciser sa teneur globale en monomères propre au bloc B et le ratio entre bloc B et bloc A. Ces deux ratios ne sont pas nécessairement égaux.

Le copolymère (A)ₘ-(B)ₚ-I contient entre 60% et 10% en poids de monomères du bloc B et de préférence entre 50 et 25%. La proportion de bloc B dans le copolymère à blocs est comprise entre 10 et 50%, de préférence entre 20 et 50%.

Le procédé de préparation des copolymères (A)ₘ-(B)ₚ-I est décrit en détail dans le document WO 2004/087796. En bref, le procédé de préparation des copolymères (A)ₘ-(B)ₚ-I consiste à amorcer la polymérisation du ou des monomères nécessaires pour le bloc B par un amorceur de type alcoxyamine. Le choix des amorceurs de l'invention est primordial pour la réussite de la fabrication du matériau : ces amorceurs permettent en effet de contrôler le nombre de bras du copolymère bloc ainsi que son bon séquençage. Cette dernière caractéristique dépend du choix de l'agent de contrôle nitroxyde produit par la décomposition des alcoxyamines initiatrices.

Les formules générales des amorceurs alcoxyamines choisis selon l'invention sont donc les suivantes : 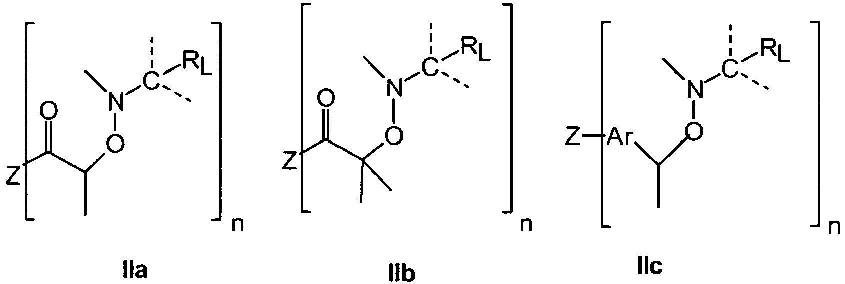 dans lesquelles :
Z à la même signification que précédemment, l'atome de carbone en position alpha de la liaison NO est porteur d'au moins un groupement organique RL de masse moléculaire supérieure ou égale à 16 g/mol. Les autres valences de l'azote ou du carbone en position alpha sont porteuses de groupements organiques tels que des groupements alkyles linéaires ou ramifiés tels que le ter butyle ou l'isopropyle, éventuellement substitué tels que le 1,1 diméthyl 2-hydroxy éthyle, des atomes d'hydrogène, des cycles aromatiques tels que le groupement phényl éventuellement substitué.

Les alcoxyamines préférées de l'invention sont celles répondant aux formules suivantes :

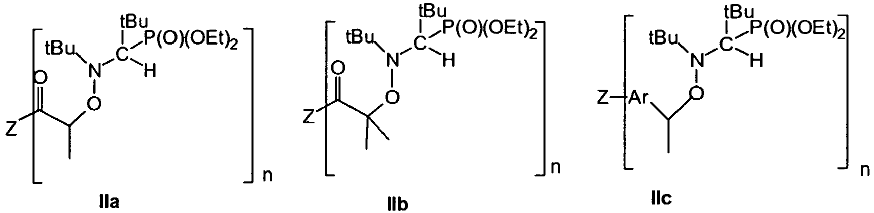

A ces molécules II, sont associées des nitroxydes X correspondant à la formule générale :

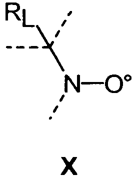

R_{L} ainsi que les groupes rattachés à l'atome d'azote et à l'atome de carbone en alpha de l'azote ont la même signification que précédemment.

Le choix de n entier supérieur ou égal à 2 permet en particulier d'assurer un très haut taux de copolymères à blocs dans le matériau final en limitant la présence de bloc B non réagi après la formation de A.

Le choix de R_{L} est particulièrement important de manière à assurer lors de la formation de B un bon contrôle de la polymérisation qui permet de maintenir une réactivité importante de B lors du réamorçage de A. Par préférence on citera les deux nitroxydes X1 et X2 suivants :

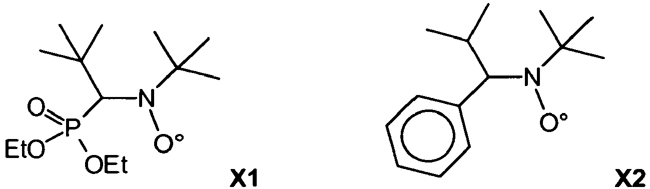

Le procédé de fabrication consiste donc à polymériser d'abord le bloc B en présence d'un amorceur de formule **II** et éventuellement d'une quantité additionnelle de composé **X** à une température comprise entre 60°C et 150°C, sous une pression allant de 1 à 10 bar. La polymérisation peut être effectuée en présence ou non d'un solvant ou en milieu dispersé. On arrête la polymérisation avant 90% de conversion. On choisit d'évaporer ou non le monomère résiduel du bloc B selon la facilité liée au procédé de synthèse. On ajoute alors la quantité de monomère pour le bloc A. On procède à la polymérisation du bloc A dans des conditions similaires à celle du bloc B. La polymérisation du bloc A est poursuivie à la conversion visée. La récupération du produit se fait simplement par séchage du polymère selon un moyen connu de l'homme de l'art. Lors de cette étape, on ajoute les divers additifs nécessaires à la protection UV et thermique requise pour l'application film acrylique et par extrusion avec une filière plate on réalise un film à l'épaisseur souhaitée.

Le PMMA désigne un homo- ou copolymère du méthacrylate de méthyle (MAM), comprenant en poids au moins 50% de MAM. Le copolymère est obtenu à partir de MAM et d'au moins un comonomère copolymérisable avec le MAM. De préférence, le copolymère comprend en poids de 70 à 99,5%, avantageusement de 80 à 99,5%, de préférence de 80 à 99% de MAM pour respectivement de 0,5 à 30%, avantageusement de 0,5 à 20%, de préférence de 1 à 20% de comonomère. De préférence, le comonomère copolymérisable avec le MAM est un monomère (méth)acrylique ou un monomère vinylaromatique tel que par exemple le styrène, les styrènes substitués, l'alpha-méthylstyrène, le monochlorostyrène, le tertbutyl styrène. De préférence, il s'agit d'un (méth)acrylate d'alkyle, notamment de l'acrylate de méthyle, d'éthyle, de propyle, de butyle, du méthacrylate de butyle.

Le PMMA pourra être avantageusement un copolymère du MAM et de l'acide acrylique et/ou méthacrylique. Ce type de PMMA offre une résistance thermomécanique ainsi qu'une résistance à la rayure améliorée par rapport à un PMMA n'en contenant pas.

Selon un deuxième aspect, la présente invention a trait à un procédé de fabrication d'un article plat transparent à partir de la composition de résine acrylique précitée, ledit procédé comprenant une étape d'extrusion/calandrage de ladite composition.

Selon un autre aspect, l'invention concerne un article plat transparent contenant la composition de résine acrylique précitée, présentant les caractéristiques suivantes :
- une épaisseur allant de 300 à 900 microns, de préférence de 400 à 700 micromètres ;
- une transmission lumineuse au moins égale à 91% ;
- un trouble inférieur ou égal à 2% (pourcentage de lumière qui est dévié à plus de 2,5 degré par rapport à la direction de la lumière incidente) ;
- absence de trouble lorsque la température monte jusqu'à 80°C.

Il a été constaté que l'article plat transparent selon l'invention présente une résistance à l'impact supérieure à 25 kJ/m².

Selon encore un autre aspect, l'invention a trait à l'utilisation de l'article plat transparent précité dans des dispositifs du type écran plat LCD équipé de diodes électroluminescentes ou LED (pour « light-emitting diode ») ou écran extra-plat avec un éclairage tangentiel (par la tranche).

Les propriétés uniques de cet article le recommandent tout particulièrement pour une utilisation dans la fabrication des écrans plats LCD ou extra-plats de faible épaisseur, en raison de ses propriétés optiques tout à fait remarquables (transmission lumineuse d'au moins 91 %), de la conservation de ces propriétés optiques quelque soit la température d'usage de l'écran plat, de ses bonnes propriétés mécaniques notamment à l'impact et de ses bonnes propriétés de surface (résistance à l'abrasion et aux rayures).

Selon un autre aspect, l'invention concerne des écrans plats ou extra-plats comprenant au moins un article plat transparent selon l'invention.

L'invention va maintenant être illustrée par un exemple de réalisation qui non limitatif de la portée de l'invention.

### Exemple de réalisation

Un copolymère à blocs acrylique (composant 2) a été synthétisé selon le procédé suivant :

### Préparation du bloc B

Dans un réacteur métallique muni d'une agitation mécanique et d'une double enveloppe, on introduit 6000 g d'acrylate de n-butyle, 65 g d'acide 2-méthyl-2-[N-tertiobutyl-N-(1-diéthoxyphosphoryl-2,2-diméthylpropyl)aminoxy]propanoïque comme amorceur (conduisant, après décomposition, à la formation d'un groupement organique du type Ib), et 3,2 g de N-tertiobutyl-N-(1-diéthoxyphosphoryl-2,2-diméthylpropyl)aminoxy, utilisé comme nitroxyde. Le rapport molaire amorceur/nitroxyde est de 7%.

La température du milieu réactionnel est portée à 115°C.

Au bout de 225 minutes, la conversion de l'acrylate de n-butyle est de 55,3%. Un prélèvement permet de déterminer les caractéristiques du bloc B ainsi produit par chromatographie d'exclusion stérique.
Masse moyenne en nombre Mn : 33000 Da
Masse moyenne en poids Mw : 44000 Da
Indice de polymolécularité Ip=Mw/Mn : 1,3

### Préparation du bloc A

On coule alors dans le réacteur 2000 g de méthyléthylcétone, 4000g de MAM et 444 g d'acide méthacrylique. La polymérisation du bloc A est réalisée à une température de 90°C.

Conversion atteinte : 51 %.

L'analyse par chromatographie d'exclusion stérique du copolymère obtenu est la suivante :
- masse moyenne en nombre Mn : 77160 g/mol
- masse moyenne en poids Mw : 134000 g/mol
- indice de polymolécularité Ip (rapport entre Mw et Mn): 1,75

L'analyse de composition par ¹H RMN indique :
- teneur en acrylate de n-butyle : 42% en poids
- teneur en méthacrylate de méthyle : 53% en poids
- teneur en acide méthacrylique : 5% en poids.

Le copolymères à blocs décrits plus haut a été mélangé par extrusion à l'état fondu à avec un PMMA (composant 1) commercialisé par la société ARKEMA sous la référence ALTUGLAS^{®} V021 c.

Les échantillons suivants ont été utilisés :
- échantillon 1 (comparatif) : copolymère à blocs décrit plus haut (composant 2);
- échantillon 2 (comparatif) : mélange du copolymère à blocs (composant 2) avec une matrice PMMA (composant 1) dans les proportions suivantes : 66% composant 2 et 34% composant 1 (en poids) ;
- échantillon 3 (selon l'invention) : mélange du copolymère à blocs (composant 2) avec une matrice PMMA (composant 1) dans les proportions suivantes : 34% composant 2 et 66% composant 1 (en poids) ;
- échantillon 4 (comparatif) : polymère du type PMMA renforcé à l'aide d'un modifiant choc, commercialisé par la société ARKEMA sous la référence ALTUGLAS^{®} DRT.

Ces échantillons ont été évalués mécaniquement et optiquement suivant les normes respectives :
Norme ISO 178 : détermination du module en flexion ou rigidité, exprimée en Mpa.
Norme ISO 179-2D : détermination de la résistance à l'impact sur éprouvettes de type Charpy non entaillé, exprimée en kJ/m².
Norme ASTM D1003 : détermination de la transmission lumineuse totale et du trouble (« haze »), exprimés en %.
Norme NFT 51 113 : détermination de la résistance à la rayure Ericksen (avec une charge de 2N et vitesse de 10,5 mm/s), exprimée en microns.

Les résultats obtenus figurent dans le tableau 1 ci-dessous (T étant une température de maximum 80°C):

**Tableau 1**

| N° Echantillon | | | | |
|---|---|---|---|---|
| | 1 | 2 | 3 | 4 |
| | | | | |
| Trouble (%) | 5 | 3 | 2 | 2 |
| Transmission lumineuse (%) | 91,3 | 91,4 | 91,9 | 91 |
| Module en flexion (Mpa) | 1556 | 2223 | 2840 | 1700 |
| Résistance à l'impact (kJ/m²) | 68 | 32 | 26 | 60 |
| Variation du trouble avec T | non | non | non | oui |
| Epaisseur (mm) | 500 | 500 | 500 | 500 |
| Résistance à la rayure (µm) | - | - | 99 | 124 |

L'exemple 3 de l'invention permet de répondre parfaitement au cahier des charges pour une application écran plat transparent de faible épaisseur (inférieure à 1 mm) en ayant une rigidité élevée, une valeur d'impact supérieure à 25 kJ/m², une transmission lumineuse supérieure à 90%, une valeur de trouble inférieure ou égale à 2% et surtout ne montrant pas de variation du trouble avec la température.

## Revendications

1. Composition de résine acrylique comprenant une matrice de PMMA ayant une température de transition vitreuse supérieure à 0°C dans laquelle est dispersé un copolymère à blocs acrylique de formule générale (A)ₘ-(B)ₚ-I, p étant un entier supérieur ou égal à 2, m étant un entier inférieur ou égal à p, B étant un bloc polymère lié directement au coeur I par une liaison covalente, obtenu par la polymérisation d'un mélange de monomères (B₀) contenant au moins 60% en poids de monomères acryliques (b₁), A étant un bloc polymère, lié directement au bloc B par une liaison covalente, obtenu par la polymérisation d'un mélange de monomères (A₀) contenant au moins 60% en poids de monomères méthacryliques (a₁), le coeur (I) étant un groupement organique répondant à une des formules suivantes : 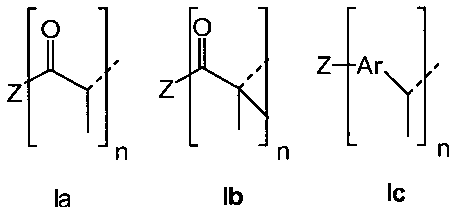 où Ar désigne un groupement aromatique substitué, Z est un radical organique ou minéral polyfonctionnel de masse molaire supérieure ou égale à 14, n étant supérieur ou égal à 2,
**caractérisée en ce qu'**elle comprend de 60 à 80% en poids de ladite matrice de PMMA, et de 20 à 40% en poids dudit copolymère à blocs, dans laquelle la masse moléculaire moyenne en poids (Mw) du copolymère à blocs (A)ₘ-(B)ₚ-I varie de 80000 g/mol à 300000 g/mol, et sa polydispersité varie de 1,5 à 2,5.

2. Composition selon la revendication 1 dans laquelle B présente une température de transition vitreuse (Tg) inférieure à 0°C, une masse moyenne en poids (Mw) allant de 40000 à 200000g/mol et un indice de polydispersité (Ip) allant de 1,1 à 2,5 et de préférence de 1,1 à 2,0.

3. Composition selon l'une des revendications 1 et 2 dans laquelle le mélange de monomères B₀ comprend :
- de 60 à 100% en poids d'au moins un monomère acrylique (b₁) choisi parmi les acrylates d'alkyles ayant une chaîne alkyle comportant au moins deux atomes de carbone et de préférence au moins quatre atomes de carbone tels que l'acrylate de butyle, d'octyle, de nonyle, de 2-éthyl héxyle, les acrylate de polyéthylène glycol ou l'acrylonitrile ;
- de 0 à 40% en poids de monomères (b2) choisis parmi les monomères polymérisables par voie radicalaire tels que les monomères éthyléniques, vinyliques et similaires.

4. Composition selon l'une des revendications 1 à 3 dans laquelle le bloc A présente une température Tg supérieure à 50°C.

5. Composition selon l'une des revendications 1 à 4 dans laquelle le bloc A est obtenu par la polymérisation d'un mélange de monomères A₀ comprenant :
- de 60 à 100% en poids, de préférence de 75 à 98% en poids, d'au moins un monomère méthacrylique (a1) choisi parmi les méthacrylates d'alkyles tels que de méthyle, de butyle, d'octyle, de nonyle, de 2-(éthyl héxyle), ou encore des méthacryliques fonctionnels tels que l'acide méthacrylique, le méthacrylate de glycidyle, le méthacrylonitrile ou tout méthacrylate comportant une fonction alcool, amide ou amine,
- de 0 à 40 % en poids, de préférence de 2 à 25% en poids, d'au moins un monomère (a₂) choisi parmi les anhydrides tels que l'anhydride maléique ou des monomères vinyl aromatiques tels que le styrène ou ses dérivés, en particulier l'alpha méthyl styrène et les monomère répondant à b1.

6. Composition selon l'une des revendications 1 à 5 dans laquelle la quantité de copolymère à blocs est de 34% en poids.

7. Procédé de fabrication d'un article plat transparent à partir de la composition selon l'une des revendications 1 à 6 comprenant une étape d'extrusion de ladite composition.

8. Article plat transparent contenant la composition selon l'une des revendications 1 à 6, **caractérisé en ce qu'**il présente les caractéristiques suivantes :
- une épaisseur allant de 300 à 900 microns, de préférence de 400 à 700 micromètres ;
- une transmission lumineuse au moins égale à 91% ;
- un trouble inférieur ou égal à 2% .

9. Article selon la revendication 8 présentant en outre une résistance à l'impact supérieure à 25 kJ/m².

10. Utilisation de l'article plat transparent selon l'une des revendications 8 et 9 dans un dispositif de type écran plat LCD.

11. Utilisation de l'article plat transparent selon l'une des revendications 8 et 9 dans un dispositif de type écran extra-plat à éclairage par la tranche.

12. Ecran plat LCD comprenant au moins un article selon l'une des revendications 8 et 9.

13. Ecran extra-plat comprenant au moins un article selon l'une des revendications 8 et 9.

## Claims

1. Acrylic resin composition comprising a PMMA matrix having a glass transition temperature of greater than 0°C, dispersed in which is an acrylic block copolymer of general formula (A)ₘ-(B)ₚ-I, p being an integer greater than or equal to 2, m being an integer less than or equal to p, B being a polymer block bonded directly to the core I by a covalent bond, obtained by the polymerization of a mixture of monomers (B₀) containing at least 60% by weight of acrylic monomers (b₁), A being a polymer block, bonded directly to the B block by a covalent bond, obtained by the polymerization of a mixture of monomers (A₀) containing at least 60% by weight of methacrylic monomers (a₁), the core (I) being an organic group corresponding to one of the following formulae: 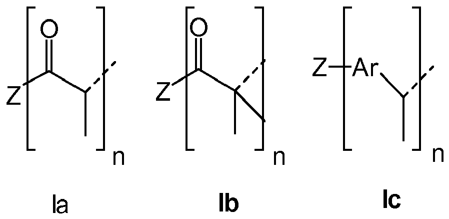 where Ar denotes a substituted aromatic group, Z is a polyfunctional organic or inorganic radical having a molecular weight greater than or equal to 14, n being greater than or equal to 2, **characterized in that** it comprises from 60 to 80% by weight of said PMMA matrix, and from 20 to 40% by weight of said block copolymer, in which the weight-average molecular weight (M_{w}) of the block copolymer (A)ₘ-(B)ₚ-I varies from 80 000 g/mol to 300 000 g/mol, and its polydispersity varies from 1.5 to 2.5.

2. Composition according to Claim 1, in which B has a glass transition temperature (Tg) of less than 0°C, a weight-average molecular weight (Mw) ranging from 40 000 to 200 000 g/mol and a polydispersity index (Ip) ranging from 1.1 to 2.5 and preferably from 1.1 to 2.0.

3. Composition according to either of Claims 1 and 2, in which the mixture of monomers B₀ comprises:
- from 60 to 100% by weight of at least one acrylic monomer (b₁) chosen from the alkyl acrylates having an alkyl chain that comprises at least two carbon atoms and preferably at least four carbon atoms such as butyl, octyl, nonyl or 2-ethylhexyl acrylates, polyethylene glycol acrylates or acrylonitrile;
- from 0 to 40% by weight of monomers (b₂) chosen from radical-polymerizable monomers such as ethylenic monomers, vinyl monomers, etc.

4. Composition according to one of Claims 1 to 3, in which the A block has a Tg temperature of greater than 50°C.

5. Composition according to one of Claims 1 to 4, in which the A block is obtained by the polymerization of a mixture of monomers A₀ comprising:
- from 60 to 100% by weight, preferably from 75 to 98% by weight, of at least one methacrylic monomer (a₁) chosen from alkyl methacrylates such as methyl, butyl, octyl, nonyl or 2-ethylhexyl methacrylates, or else functional methacrylic compounds such as methacrylic acid, glycidyl methacrylate, methacrylonitrile or any methacrylate comprising an alcohol, amide or amine function,
- from 0 to 40% by weight, preferably from 2 to 25% by weight, of at least one monomer (a₂) chosen from anhydrides such as maleic anhydride or vinyl aromatic monomers such as styrene or derivatives thereof, in particular alpha-methylstyrene and the monomers corresponding to b₁.

6. Composition according to one of Claims 1 to 5, in which the amount of block copolymer is 34% by weight.

7. Process for manufacturing a transparent flat article from the composition according to one of Claims 1 to 6 comprising a step of extruding said composition.

8. Transparent flat article containing the composition according to one of Claims 1 to 6, **characterized in that** it has the following features:
- a thickness ranging from 300 to 900 microns, preferably from 400 to 700 micrometres;
- a light transmission at least equal to 91%;
- a haze of less than or equal to 2%.

9. Article according to Claim 8, additionally having an impact strength of greater than 25 kJ/m².

10. Use of the transparent flat article according to either of Claims 8 and 9, in a device of LCD flat panel type.

11. Use of the transparent flat article according to either of Claims 8 and 9, in a device of edge-lit extra-flat panel type.

12. LCD flat panel comprising at least one article according to either of Claims 8 and 9.

13. Extra-flat panel comprising at least one article according to either of Claims 8 and 9.

## Patentansprüche

1. Acrylharzzusammensetzung, umfassend eine PMMA-Matrix mit einer Glasübergangstemperatur von mehr als 0°C, in der ein Acrylblockcopolymer der allgemeinen Formel (A)ₘ-(B)ₚ-I dispergiert ist, wobei p für eine ganze Zahl größer gleich 2 steht, m für eine ganze Zahl kleiner gleich p steht, B für einen über eine kovalente Bindung direkt an den Kern I gebundenen, durch Polymerisation einer Monomerenmischung (B₀), die mindestens 60 Gew.-% Acrylmonomere (b₁) enthält, erhaltenen Polymerblock steht, A für einen über eine kovalente Bindung direkt an den Block B gebundenen, durch Polymerisation einer Monomerenmischung (A₀), die mindestens 60 Gew.-% Methacrylmonomere (a₁) enthält, erhaltenen Polymerblock steht, der Kern (I) für eine organische Gruppe steht, die einer der folgenden Formeln entspricht: 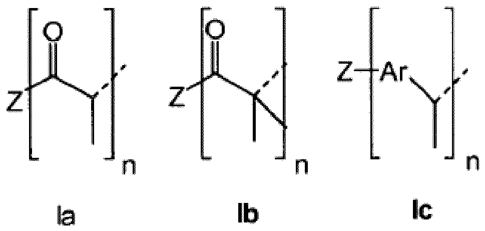 wobei Ar für eine substituierte aromatische Gruppe steht, Z für einen polyfunktionellen organischen oder anorganischen Rest mit einer Molmasse größer gleich 14 steht, wobei n größer gleich 2 ist, **dadurch gekennzeichnet, dass** sie 60 bis 80 Gew.-% der PMMA-Matrix und 20 bis 40 Gew.-% des Blockcopolymers umfasst, wobei die gewichtsmittlere Molmasse (Mw) des Blockcopolymers (A)ₘ-(B)ₚ-I von 80.000 g/mol bis 300.000 g/mol variiert und dessen Polydispersität von 1,5 bis 2,5 variiert.

2. Zusammensetzung nach Anspruch 1, wobei B eine Glasübergangstemperatur (Tg) von weniger als 0°C, eine gewichtsmittlere Molmasse (Mw) im Bereich von 40.000 g/mol bis 200.000 g/mol und einen Polydispersitätsindex (Ip) im Bereich von 1,1 bis 2,5 und vorzugsweise 1,1 bis 2,0 aufweist.

3. Zusammensetzung nach einem der Ansprüche 1 und 2, wobei die Monomerenmischung B₀
- 60 bis 100 Gew.-% mindestens eines Acrylmonomers (b₁), das aus Alkylacrylaten mit einer Alkylkette mit mindestens zwei Kohlenstoffatomen und vorzugsweise mindestens vier Kohlenstoffatomen wie Butylacrylat, Octylacrylat, Nonylacrylat, 2-Ethylhexylacrylat, Polyethylenglykolacrylaten oder Acrylnitril ausgewählt ist;
- 0 bis 40 Gew.-% Monomere (b₂), die aus radikalisch polymerisierbaren Monomeren wie ethylenischen Monomeren, vinylischen Monomeren und ähnlichen Monomeren ausgewählt sind;
umfasst.

4. Zusammensetzung nach einem der Ansprüche 1 bis 3, wobei der Block A eine Tg-Temperatur von mehr als 50°C aufweist.

5. Zusammensetzung nach einem der Ansprüche 1 bis 4, wobei der Block A durch Polymerisation einer Monomerenmischung A₀, die
- 60 bis 100 Gew.-%, vorzugsweise 75 bis 98 Gew.-%, mindestens eines Methacrylmonomers (a₁), das unter Alkylmethacrylaten wie Methylmethacrylat, Butylmethacrylat, Octylmethacrylat, Nonylmethacrylat, 2-(Ethylhexyl)methacrylat oder auch funktionellen Methacrylaten wie Methacrylsäure, Glycidylmethacrylat, Methacrylnitril oder einem Methacrylat mit einer Alkohol-, Amid- oder Aminfunktion ausgewählt ist;
- 0 bis 40 Gew.-%, vorzugsweise 2 bis 25 Gew.-%, mindestens eines Monomers (a₂), das aus Anhydriden wie Maleinsäureanhydrid oder vinylaromatischen Monomeren wie Styrol oder Derivaten davon, insbesondere alpha-Methylstyrol, und Monomeren gemäß b₁ ausgewählt ist;
umfasst, erhalten wird.

6. Zusammensetzung nach einem der Ansprüche 1 bis 5, wobei die Menge an Blockcopolymer 34 Gew.-% beträgt.

7. Verfahren zur Herstellung eines transparenten flachen Artikels aus der Zusammensetzung nach einem der Ansprüche 1 bis 6, bei dem man die Zusammensetzung extrudiert.

8. Transparenter flacher Artikel, enthaltend die Zusammensetzung nach einem der Ansprüche 1 bis 6, **dadurch gekennzeichnet, dass** er die folgenden Merkmale aufweist:
- eine Dicke im Bereich von 300 bis 900 Mikron, vorzugsweise 400 bis 700 Mikrometer;
- eine Lichtdurchlässigkeit von mindestens 91%;
- eine Trübung kleiner gleich 2%.

9. Artikel nach Anspruch 8, der außerdem eine Schlagzähigkeit von mehr als 25 kJ/m² aufweist.

10. Verwendung des transparenten flachen Artikels nach einem der Ansprüche 8 und 9 in einer Vorrichtung vom LCD-Flachbildschirm-Typ.

11. Verwendung des transparenten flachen Artikels nach einem der Ansprüche 8 und 9 in einer Vorrichtung vom Extraflachbildschirm-Typ mit Kantenbeleuchtung.

12. LCD-Flachbildschirm, umfassend mindestens einen Artikel nach einem der Ansprüche 8 und 9.

13. Extraflachbildschirm, umfassend mindestens einen Artikel nach einem der Ansprüche 8 und 9.
